# EUROPEAN PATENT APPLICATION

(11) **EP 4 404 308 A1**
(43) Date of publication of application: **24.07.2024**
(21) Application number: 22956037.0
(22) Date of filing: 25.08.2022
(51) Int. Cl.: H01M 4/62

(54) **FUNCTIONAL POLYMER, ELECTRODE SLURRY, ELECTRODE SHEET, BATTERY, AND ELECTRIC APPARATUS**

(71) Applicant: Contemporary Amperex Technology Co., Limited, Ningde, Fujian 352100 (CN)
(72) Inventor: XU, Yunpeng, Ningde, Fujian 352100 (CN); XU, Jian, Ningde, Fujian 352100 (CN); WU, Yanying, Ningde, Fujian 352100 (CN); WANG, Xinghui, Ningde, Fujian 352100 (CN)
(74) Representative: Gong, Jinping
(86) International application number: PCT/CN2022/114664
(87) International publication number: WO 2024/040489

(57) **Abstract**

The present application relates to a functional polymer, an electrode slurry, an electrode plate, a battery and a power consuming device. The functional polymer comprises structural units represented by formula (A), formula (B) and formula (C). The functional polymer can increase the dispersion stability of the electrode slurry and also have the function of toughening, so as to increase the dispersion uniformity of the components in an electrode active layer while increasing its toughness, and further increase the cycling stability of the battery.

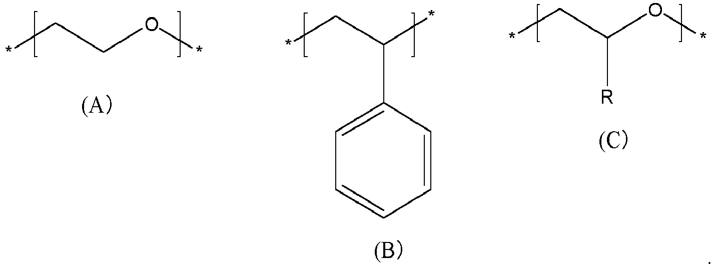

## Description

### Technical Field

The present application relates to the field of batteries, and particularly to a functional polymer, an electrode slurry, an electrode plate, a battery and a power consuming device.

### Background Art

Lithium ion secondary batteries have the characteristics of excellent cycling performance, excellent safety performance, low cost and environmental friendliness, etc., and are the focus of attention in the field of new energy. With the development of science and technology, in order to meet the development trend of miniaturization and thinning of various electrical appliances and to increase the endurance mileages of electric vehicles, increasingly high requirements have been put forward for lithium batteries in terms of cycling service life.

In traditional technology, the rate performance and cycling service life of a lithium battery are often increased by increasing the loading of an active material on an electrode plate, which is realized by thick coating: an electrode slurry containing the active material is coated on a current collector, and then dried to prepare the electrode plate. Increasing the thickness of the coating can increase the loading capacity of the active material on the prepared electrode plate. However, thick coating leads to the problem that the prepared electrode plate is prone to cracking, and the components in the coating are more likely to be dispersed unevenly during thick coating, which will have a negative impact on the cycling stability and rate of a lithium ion secondary battery. Therefore, the traditional technology still needs to be improved.

### Summary of the Invention

In view of the above problems, the present application provides a functional polymer, an electrode slurry, an electrode plate, a battery and a power consuming device, aiming to increase the cycling stability of the battery.

In order to achieve the above purpose, a first aspect of the present application provides a functional polymer, which comprises structural units represented by formula (A), formula (B) and formula (C): 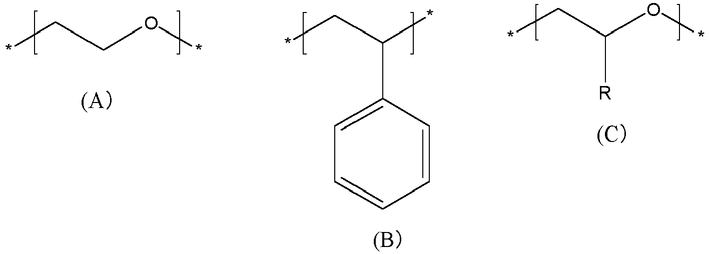 * represents a linking site, and R is selected from a combination of one or more of branched polyester segments, branched alkane groups with 4-60 carbon atoms, and branched polyolefins.

The above functional polymer can increase the dispersion stability of the electrode slurry and also have the function of toughening, and increase the dispersion uniformity of the components in an electrode active layer while increasing its anti-cracking ability, thereby increasing the stability and anti-cracking ability of the electrode plate, and further increasing the cycling stability and rate of the battery.

Although the mechanism is still unclear, the inventors of the present application speculate that it is due to: the above functional polymer compriseing structural units represented by formula (A), formula (B) and formula (C), wherein the structural unit of formula (A) has a non-polar hydrophilic structure, which is beneficial to the uniform dispersion of the groups in the electrode slurry in a solvent, and the side group of the structural unit of formula (B) contains a benzene ring, which has an adsorption effect on a conductive carbon material, etc., and is beneficial to the uniform dispersion of a conductive agent in the electrode slurry. Moreover, in the prepared electrode active layer, the benzene ring on the structural unit of formula (B) can prevent the slippage between the components and increase the stability and toughness of the electrode active layer. The structural unit represented by formula (C) contains branched groups, which are beneficial to the dispersion of the components in the electrode slurry on the one hand, and act as a supporting network in the prepared electrode active layer on the other hand and play an anchoring role for the components in the electrode active layer, so as to prevent cracking due to slippage between the components. As a result, the synergistic action of the segments in the functional polymer can increase the dispersion stability of the electrode slurry and also have the function of toughening, and increase the dispersion uniformity of the components in an electrode active layer while increasing its anti-cracking ability, thereby increasing the stability and anti-cracking ability of the electrode plate, and further increasing the cycling stability and rate of the battery.

In addition, the above functional polymer has excellent oxidation resistance and the probability of side reactions of the functional polymer with an electrolyte solution is small, and the electrode active layer prepared therefrom has a high stability, that is, it can maintain excellent performance even under high voltage (above 4 V), and can reduce the internal resistance of the battery, thereby increasing the cycling performance and rate of the battery.

In any embodiment of the present application, the functional polymer satisfies at least one of conditions (1) - (3):
(1) the mass proportion of the structural unit represented by formula (A) in the functional polymer is 20 wt% - 60 wt%;
   optionally, the mass proportion of the structural unit represented by formula (A) in the functional polymer is 20 wt% - 40 wt%;
(2) the mass proportion of the structural unit represented by formula (B) in the functional polymer is 20 wt% - 60 wt%;
   the mass proportion of the structural unit represented by formula (B) in the functional polymer is 20 wt% - 40 wt%; and
(3) the mass proportion of the structural unit represented by formula (C) in the functional polymer is 20 wt% - 60 wt%.

In any embodiment of the present application, R is selected from any one of dendritic polyester segments, alkane groups containing at least two branches with 4-50 carbon atoms, and dendritic polyolefin segments.

In any embodiment of the present application, the structural unit represented by formula (C) satisfies at least one of conditions (4) - (5):
(4) R is selected from alkane groups containing at least two branches with 4-50 carbon atoms or dendritic polyolefin segments with a number average molecular weight of 100 - 2000; and
(5) the structural unit represented by formula (C) has a number average molecular weight of 50 - 5000.

In any embodiment of the present application, R comprises a branched structure as shown below: 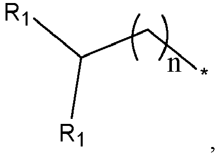 wherein each R₁ is independently selected from alkane groups with 1-20 carbon atoms, and n is selected from any integer of 1 - 10.

In any embodiment of the present application, each R₁ is independently selected from alkane groups with 1 - 5 carbon atoms, respectively;
optionally, each R₁ is independently selected from any one of methyl, ethyl, propyl, n-butyl and isobutyl, respectively.

In any embodiment of the present application, the functional polymer comprises polymeric segments represented by formula (A1), formula (B1) and formula (C1): 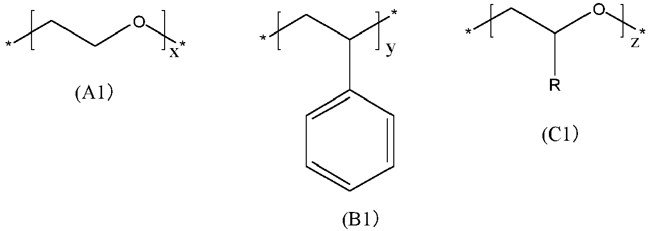 wherein x, y, and z represent the degree of polymerization, and x, y, and z are independently selected from any integer of 20 - 80, respectively.

In any embodiment of the present application, the functional polymer comprises a molecular chain structure represented by formula (1): 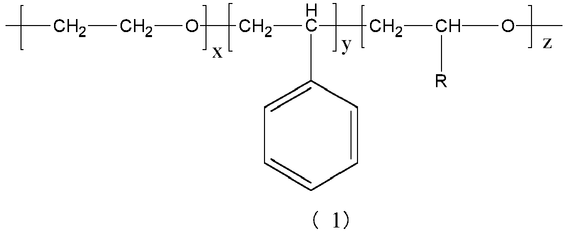 wherein x, y, and z represent the degree of polymerization, and x, y, and z are independently selected from any integer of 20 - 80, respectively.

In any embodiment of the present application, the functional polymer has a HLB value of 6 - 14; optionally, the functional polymer has a HLB value of 7 - 11.

In any embodiment of the present application, the number average molecular weight of the functional polymer is 10000 - 50000.

A second aspect of the present application provides the use of the functional polymer of the first aspect as an electrode additive.

When the above functional polymer is used as an electrode additive, on the one hand, it has the function of a dispersant, which is beneficial to the uniform dispersion of the conductive agent in the electrode slurry and increases the dispersion stability of the electrode slurry; and on the other hand, it also has the function of toughening, which can increase the anti-cracking ability of the electrode active layer, thereby increasing the stability and anti-cracking ability of the electrode plate, and further increasing the cycling stability and rate of the battery.

A third aspect of the present application provides an electrode slurry, which comprises an electrode active material, a conductive agent, and the functional polymer of the first aspect.

The electrode slurry has a good dispersion stability, and can maintain good dispersion even after long-term storage, which is very convenient for processing.

In any embodiment of the present application, based on the total mass of the components of the electrode slurry except the solvent, the mass proportion of the functional polymer is 0.1% - 0.5%;
optionally, the mass proportion of the functional polymer is 0.2% - 0.5%.

In any embodiment of the present application, the electrode active material is a positive electrode active material or a negative electrode active material.

A fourth aspect of the present application provides an electrode plate, which comprises a current collector and an active layer located on the surface of the current collector, and the components of the active layer include a functional polymer of the first aspect; or the electrode plate is prepared by using an electrode active slurry of the third aspect.

A fifth aspect of the present application provides a battery, which comprises an electrode plate of the fourth aspect.

A sixth aspect of the present application provides a power consuming device, which comprises a battery of the fifth aspect.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
Fig. 1 is a schematic diagram of an embodiment of a battery.
Fig. 2 is an exploded view of Fig. 1.
Fig. 3 is a schematic diagram of an embodiment of a battery module.
Fig. 4 is a schematic diagram of an embodiment of a battery pack.
Fig. 5 is an exploded view of Fig. 4.
Fig. 6 is a schematic diagram of an embodiment of a power consuming device with a battery as a power source;
Fig. 7 is a comparison diagram of the viscosity change curves of a positive electrode slurry prepared in Example 1 and a blank positive electrode slurry;
Fig. 8 is a comparison diagram of the CV curves of a lithium ion secondary battery prepared in Example 1 and a blank lithium ion secondary battery;
Fig. 9 is a comparison diagram of the discharge DCR-SOC curves of a lithium ion secondary battery prepared in Example 1 and a blank lithium ion secondary battery at 25°C with different states of charge (SOC);
Fig. 10 is a comparison diagram of the discharge DCR-SOC curves of a lithium ion secondary battery prepared in Example 1 and a blank lithium ion secondary battery at -25°C with different states of charge (SOC);
Fig. 11 is a bar chart of the capacity retention rates of a lithium ion secondary battery prepared in Example 1 and a blank lithium ion secondary battery at different temperatures;
Fig. 12 is a comparison bar chart of the capacity retention rates of a lithium ion secondary battery prepared in Example 1 and a blank lithium ion secondary battery at a rate of 0.5 C;
Fig. 13 is a comparison bar chart of the capacity retention rates of a lithium ion secondary battery prepared in Example 1 and a blank lithium ion secondary battery at a rate of 2 C.

### List of reference numerals:

1. battery pack; 2. upper case body; 3. lower case body; 4. battery module; 5. battery; 51. housing; 52. electrode assembly; 53. cover plate; 6. power consuming device.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

In the present application, the term "alkane group" refers to a group formed after an alkane loses a hydrogen atom, for example, methane loses a hydrogen atom to form a methyl.

The term "alkane" refers to an alkane in which all carbon atoms are connected by carbon-carbon single bonds and do not form a ring, and the remaining valence bonds are combined with hydrogen, including straight alkanes and branched alkanes.

In the present application, when the linking site is not specified in the group, it means that optional linkable site in the group is used as a linking site.

In the present application, "*" indicates a linking site.

In the present application, the term "structural unit" means: a basic unit of a monomer molecule entering a macromolecular chain by means of polymerization, which is also called "monomer unit". The elemental composition of the structural unit may be the same as or different from that of the monomer unit. There may be one or more kinds of structural units in a polymer molecule. When there is only one kind of structural unit in the polymer molecule, "structural unit" is the repeating unit, such aspolyvinyl chloride (CH₂-CHCl)n, whose repeating unit is the same as the structural unit, both are - CH₂CHCl-, while nylon-66 has two kinds of structural units.

As mentioned in the Background Art, in the traditional technology, the loading of the active material on an electrode plate is often increased by thick coating, thereby increasing the rate performance and cycling service life of a lithium battery. However, thick coating leads to the problem that the prepared electrode plate is prone to cracking, and the components in the coating are more likely to be dispersed unevenly during thick coating, which will have a negative impact on the cycling stability and rate of a lithium ion secondary battery. Therefore, in the traditional technology, it is often necessary to add various functional additives with different functions to increase its dispersibility or toughness. For example, it is necessary to add a dispersant to increase the dispersibility of the components in the slurry and a toughening agent to increase the toughness of the active layer.

According to a traditional technical solution, in order to enable the components on the active layer to be uniformly dispersed and the active layer to have good toughness at the same time, various functional additives such as a dispersibility and a toughening agent should be added at the same time, while those skilled in the present application have studied the traditional technical solution and found that if various functional additives, such as a dispersibility and a toughening agent, are added at the same time, the proportion of the active material in the active layer will be inevitably reduced, which will hinder the increase of the loading of the active material on the electrode plate.

Therefore, those skilled in the present application obtain the functional polymer of the present application which can increase the dispersion stability of the electrode slurry and also have the function of toughening with a large number of creative experiments. The functional polymer can increase the dispersion uniformity of the components in the electrode active layer while increasing its toughness, and increase the stability and anti-cracking ability of the electrode plate, thereby further increasing the cycling stability of the battery.

An embodiment of the present application provides a functional polymer, which comprises structural units represented by formula (A), formula (B) and formula (C): 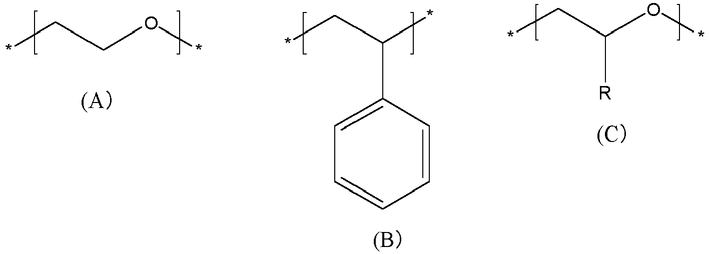 * represents a linking site, and R is selected from a combination of one or more of branched polyester segments, branched alkane groups with 4-60 carbon atoms, and branched polyolefins.

The above functional polymer can increase the dispersion stability of the electrode slurry and also have the function of toughening, and increase the dispersion uniformity of the components in an electrode active layer while increasing its anti-cracking ability, thereby increasing the stability and anti-cracking ability of the electrode plate, and further increasing the cycling stability and rate of the battery.

Although the mechanism is still unclear, the inventors of the present application speculate that it is due to: the above functional polymer comprising structural units represented by formula (A), formula (B) and formula (C), wherein the structural unit of formula (A) has a non-polar hydrophilic structure, which is beneficial to the uniform dispersion of the groups in the electrode slurry in a solvent, and the side group of the structural unit of formula (B) contains a benzene ring, which has an adsorption effect on a conductive carbon material, etc., and is beneficial to the uniform dispersion of a conductive agent in the electrode slurry. Moreover, in the prepared electrode active layer, the benzene ring on the structural unit of formula (B) can prevent the slippage between the components and increase the stability and toughness of the electrode active layer. The structural unit represented by formula (C) contains branched groups, which are beneficial to the dispersion of the components in the electrode slurry on the one hand, and act as a supporting network in the prepared electrode active layer on the other hand and play an anchoring role for the components in the electrode active layer, so as to prevent cracking due to slippage between the components. As a result, the synergistic action of the segments in the functional polymer can increase the dispersion stability of the electrode slurry and also have the function of toughening, and increase the dispersion uniformity of the components in an electrode active layer while increasing its anti-cracking ability, thereby increasing the stability and anti-cracking ability of the electrode plate, and further increasing the cycling stability and rate of the battery.

In addition, the above functional polymer has excellent oxidation resistance and the probability of reacting with an electrolyte solution is small; the electrode active layer prepared therefrom has a high stability phase, that is, it can maintain excellent performance even under high voltage (above 4 V); and it can reduce the internal resistance of the battery, thereby increasing the cycling performance and rate of the battery.

In some of the embodiments, R is selected from a combination of one or more of polyester segments with multiple branches, alkane groups with multiple branches, and polyolefins with multiple branches.

It should be understood that "multiple branches" in the above polyester segments with multiple branches, alkane groups with multiple branches, and polyolefins with multiple branches means having at least two branches.

The branches in the above polyester segments with multiple branches all include ester groups.

In some of the embodiments, the above polyester segments with multiple branches do not contain a cyclic group.

In some of the embodiments, the branches in the above polyolefins with multiple branches include at least one of the alkane groups with 4-50 carbon atoms.

In some of the embodiments, R is selected from any one of dendritic polyester segments, alkane groups containing at least two branches with 4-50 carbon atoms, and dendritic polyolefins.

Dendron polymer (dendrimer) refers to a polymer with a multi-branched structure, that is, a secondary branch is further developed on a primary branch of the polymer, and even a multi-level branch is further developed to form an orderly and regular hyperbranched structure.

In some of the embodiments, the branches in the above alkane groups containing at least two branches include at least one of the alkane groups with 4-50 carbon atoms.

In some of the embodiments, the structural unit represented by formula (C) has a number average molecular weight of 50 - 5000.

In some of the embodiments, R is selected from alkane groups containing at least two branches with 4-50 carbon atoms or dendritic polyolefin segments with a number average molecular weight of 1 00 - 2000.

In some of the embodiments, R is selected from alkane groups containing at least two branches with 4-50 carbon atoms or polyisobutene segments with a number average molecular weight of 40 - 2000.

In some of the embodiments, R comprises a branched structure as shown below: 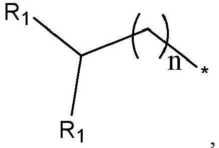 each R₁ is independently selected from alkane groups with 1-20 carbon atoms, respectively, and n is selected from any integer of 1 - 10.

In some of the embodiments, the structure of the above R is shown as

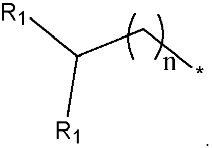

In some of the embodiments, each R₁ is independently selected from alkane groups with 1-10 carbon atoms, respectively.

In some of the embodiments, each R₁ is independently selected from alkane groups with 1 - 5 carbon atoms, respectively.

In some of the embodiments, each R₁ is independently selected from any one of methyl, ethyl, propyl, n-butyl and isobutyl, respectively.

In some of the embodiments, each R₁ is equally selected from any one of methyl, ethyl, propyl, n-butyl and isobutyl.

In a specific example, each R₁ is methyl.

n is selected from any integer of 1, 2, 3, 4, 5, 6, 7, 8, 9 and 10.

In a specific example,n is 1.

In some of the embodiments, the mass proportion of the structural unit represented by formula (A) in the functional polymer is 20 wt% - 60 wt%.

In some of the embodiments, the mass proportion of the structural unit represented by formula (A) in the functional polymer is 20 wt% - 40 wt%.

In some of the embodiments, the mass proportion of the structural unit represented by formula (B) in the functional polymer is 20 wt% - 60 wt%.

In some of the embodiments, the mass proportion of the structural unit represented by formula (B) in the functional polymer is 20 wt% - 40 wt%.

In some of the embodiments, the mass proportion of the structural unit represented by formula (C) in the functional polymer is 20 wt% - 60 wt%.

By controlling the mass proportion of each structural unit, the hydrophile-lipophile balance value of the functional polymer can be further controlled, and the dispersion effect of the functional polymer can be further increased while ensuring the excellent toughening effect of the functional polymer.

In some of the embodiments, the above functional polymer is a block polymer, which comprises polyethylene oxide segments, polystyrene segments, and segments formed by the structural unit represented by formula (C).

In some of the implementations, the above functional polymer comprises polymeric segments represented by formula (A1), formula (B1) and formula (C1): 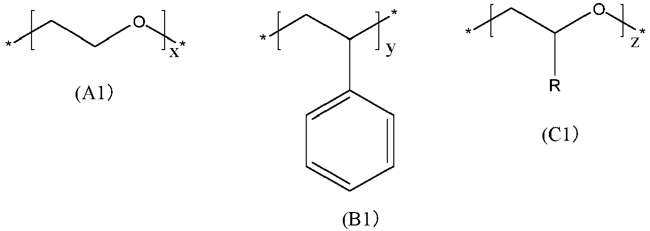 wherein x, y, and z represent the degree of polymerization.

x, y, and z are independently selected from any integer of 20 - 80, respectively.

In the same way, by controlling the mass proportion of each polymeric segment above, the hydrophile-lipophile balance value of the functional polymer can be further controlled, and the dispersion effect of the functional polymer can be further increased while ensuring the excellent toughening effect of the functional polymer.

It should be noted that, in the above functional polymer, the above polymeric segments represented by formula (A1), formula (B1) and formula (C1) are arranged in any order, and there is no specific requirement for the arrangement mode, for example, it can be A1-B1-C1 or B1-C1-A1.

In some of the embodiments, the above functional polymer comprises a molecular chain structure represented by formula (1): 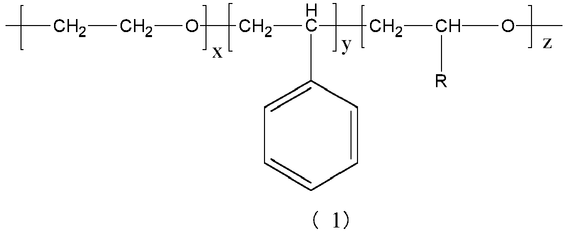 wherein x, y, and z represent the degree of polymerization.

In some of the embodiments, the above functional polymer has a HLB value of 7 - 11.

Further, the above HLB value is measured at 25°C in an aqueous solution by a critical micelle concentration method,
in which, HLB = 1.4121 *log^{[CMC]}* - 10.25, [CMC] refers to the measured critical micelle concentration of the functional polymer, and the specific measurement process refers to the standard GB/T 11276-2007.

In some of the embodiments, the number average molecular weight of the above functional polymer is 10000 - 50000.

By adjusting the number average molecular weight of the functional polymer, the dispersion stability and toughness of the functional polymer can be further optimized.

In some of the embodiments, the number average molecular weight of the above functional polymer is 15,000 - 40,000.

In some of the embodiments, the number average molecular weight of the above functional polymer is 15,000 - 30,000.

In some of the embodiments, the number average molecular weight of the above functional polymer is 15,000 - 20,000.

An embodiment of the present invention also provides the use of the above functional polymer as an electrode additive.

When the above functional polymer is used as an electrode additive, on the one hand, it has the function of a dispersant, which is beneficial to the uniform dispersion of the conductive agent in the electrode slurry and increases the dispersion stability of the electrode slurry; and on the other hand, it also has the function of toughening, which can increase the anti-cracking ability of the electrode active layer, thereby increasing the stability and anti-cracking ability of the electrode plate, and further increasing the cycling stability and rate of the battery.

An embodiment of the present application further provides an electrode slurry, which comprises an electrode active material, a conductive agent, and the above functional polymer.

The electrode slurry has a good dispersion stability, and can maintain good dispersion even after long-term storage, which is very convenient for processing.

In some of the embodiments, based on the total mass of the components of the electrode slurry except the solvent, the mass proportion of the functional polymer is 0.1% - 0.5%;
optionally, the mass proportion of the above functional polymer is 0.2% - 0.5%.

When various traditional additives with single function are used to prepare electrode plates, their addition amount is relatively large, generally 0.5% or more, which will reduce the proportion of the active material in the electrode plate. However, when the functional polymer of the present application is used, on one hand, the functional polymer has the function of a dispersant, which is beneficial to the uniform dispersion of the conductive agent in the electrode slurry and increases the dispersion stability of the electrode slurry; and on the other hand, it also has the function of toughening, which can increase the anti-cracking ability of the electrode active layer, and it can also increase the stability and anti-cracking ability of the electrode plate even with a low addition amount.

In some of the embodiments, based on the total mass of the components of the electrode slurry except the solvent, the mass proportion of the conductive agent is 1 wt% - 3 wt%.

In some of the embodiments, the above conductive agent comprises a conductive carbon material.

The conductive carbon materials comprise, but are not limited to: at least one of graphite, carbon nanotubes, nanofibers, carbon black and graphene. Specifically, the above conductive agent comprises, but is not limited to: at least one of SP, KS-6, acetylene black, ketjen black ECP with a branched structure, SFG-6, vapor-phase grown carbon fiber VGCF, carbon nanotube CNTs, graphene and a composite conductive agent thereof.

In some of the embodiments, based on the total mass of the components of the electrode slurry except the solvent, the mass proportion of the electrode active material is 93.5% - 97.8%.

In some of the embodiments, the electrode active material is a positive electrode active material or a negative electrode active material.

It can be understood that when the electrode active material is a positive electrode active material, the above electrode active slurry is a positive electrode active slurry, and the prepared electrode plate is a positive electrode plate; when the electrode active material is a negative electrode active material, the above electrode active slurry is a negative electrode active slurry, and the prepared electrode plate is a negative electrode plate.

The above positive electrode active material may be a positive electrode active material commonly used in the present application. Further, as an example, the positive electrode active material may comprise at least one of the following materials: lithium-containing phosphates of an olivine structure, lithium transition metal oxides, and their respective modified compounds. However, the present application is not limited to these materials, and other conventional materials that can be used as positive electrode active materials for batteries may also be used. These positive electrode active materials may be used alone or in combination of two or more. Examples of lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.}2₅Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811)), lithium nickel cobalt aluminum oxide (e.g. LiNi_{0.85}Co_{0.15}Al_{0.05}O₂), and modified compounds thereof, etc. Examples of lithium-containing phosphates of olivine structure may include, but are not limited to, at least one of lithium iron phosphate (e.g., LiFePO₄ (also abbreviated as LFP)), lithium manganese phosphate (e.g., LiMnPO₄), and lithium iron manganese phosphate.

In some of the embodiments, the molecular formula of the positive electrode active material is: LiFeₓMn₍₁₋ₓ₎PO₄, wherein x is selected from any number of 0 - 1.

It can be understood that when x is 0, LiFeₓMn₍₁₋ₓ₎PO₄ is LiMnPO₄ lithium manganese phosphate,and when x is 1, LiFePO₄ is LiFePO₄ lithium iron phosphate.

The above negative electrode active material may be a negative electrode active material commonly used in the present application. Further, as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some of the embodiments, the above electrode active material is a positive electrode active material.

In some of the embodiments, the electrode active material comprises at least one of lithium iron phosphate and lithium iron manganese phosphate.

The above solvents are each independently selected from at least one of water, N-methylpyrrolidone (NMP), N,N-dimethylformamide, ethanol, ethylene glycol, methanol and isopropanol.

If the electrode active material is a negative electrode active material, the solvent is water.

In some of the embodiments, the above electrode slurry further comprises a binder. Further, based on the total mass of the components of the electrode slurry except a solvent, the mass proportion of the binder is 1% - 3%.

The binder may be a binder commonly used in the field, and may be at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, hydrogenated nitrile rubber, butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA), carboxymethyl chitosan (CMCS) and fluoroacrylate resin.

An embodiment of the present application further provides an electrode plate, which comprises a current collector and an active layer located on the surface of the current collector, wherein the components of the active layer comprise the above functional polymer, or the electrode plate is prepared from the above electrode slurry.

The above current collector may be a metal foil or a composite current collector, and the composite current collector has at least one metal surface. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

The electrode plate above still has excellent flexibility under high voltage density and has excellent oxidation resistance and the probability of reacting with an electrolyte solution is small; the active layer has a high stability phase, that is, it can maintain excellent performance even under high voltage (above 4 V); and it can reduce the internal resistance of the battery, thereby increasing the cycling performance and rate of the battery.

In some of the embodiments, the above electrode plate is a positive electrode plate.

In some embodiments, the electrode plate can be prepared as follows: the above components for preparing an electrode plate, such as an electrode active material, a conductive agent, a binder and a functional polymer, are dispersed in a solvent (e.g. N-methylpyrrolidone) to form an electrode slurry; and the electrode slurry is coated onto a positive electrode current collector, followed by the procedures such as drying and cold pressing, so as to obtain the electrode plate.

An embodiment of the present application provides a battery, which comprises the above electrode plate.

Further, the above electrode plate is used as a positive electrode plate, and the battery further comprises a separator and a negative electrode plate.

The type of the separator is not particularly limited in the present application, and any well-known porous-structure separator with good chemical stability and mechanical stability may be selected and used.

In some of the embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly. The thickness of the separator is controlled at 2 µm - 15 µm; optionally, the thickness of the separator is controlled at 2 µm - 13 µm.

In some of the embodiments, an electrode assembly may be formed by the positive electrode plate, the negative electrode plate and the separator by a winding process or a laminating process.

In some of the embodiments, the above battery may include an outer package and an electrolyte solution. The outer package is used for packaging the positive electrode plate, the negative electrode plate and the electrolyte solution.

The battery may be prepared according to a conventional method in the art, for example, by winding (or laminating) a positive electrode plate, a separator, and a negative electrode plate in sequence, such that the separator is arranged between the positive electrode plate and the negative electrode plate and serves the function of separation, thereby obtaining an electrode assembly, placing the electrode assembly in an outer package, injecting an electrolyte solution, and sealing the outer package to obtain the battery.

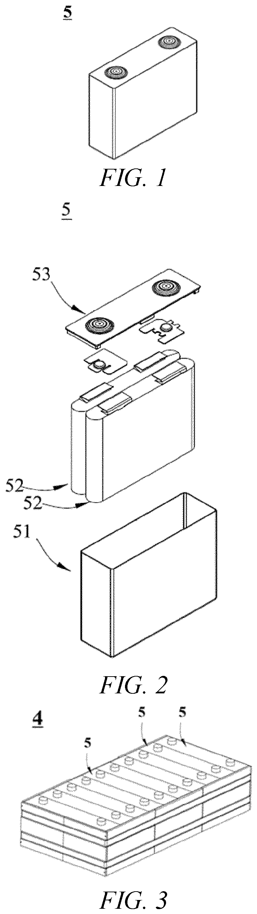

In the embodiments of the present application, the shape of the battery is not particularly limited and may be a cylindrical shape, a square shape, or any other shape. Fig. 1 shows a battery 5 with a square structure as an example.

In some embodiments, referring to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity.

The positive electrode plate, the negative electrode plate and the separator can form an electrode assembly 52 by a winding process or a laminating process. The electrode assembly 52 is packaged in the accommodating cavity. The electrolyte solution infiltrates the electrode assembly 52. The number of the electrode assemblies 52 contained in the battery 5 may be one or more, and may be adjusted according to requirements.

In some examples, the outer package of the battery may be a hard shell, such as a hard plastic shell, an aluminum shell, a steel shell, etc. The outer package of the battery may also be a soft bag, such as a pouch-type soft bag. The material of the soft bag may be a plastic and may include, for example, one or more of polypropylene (PP), polybutylene terephthalate (PBT), polybutylene succinate (PBS), etc.

In some embodiments, the above electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the above electrolyte solution may also optionally comprise a functional additive. For example, the functional additive may include a negative electrode film-forming additive, a positive electrode film-forming additive, and also an additive that can improve certain performances of the battery, such as an additive that improves the overcharge performance of the battery, or an additive that improves the high temperature performance or low temperature performance of the battery.

The above battery is a lithium ion secondary battery.

In some embodiments, the battery can be assembled into a battery module, and the number of batteries contained in the battery module may be multiple, and the specific number can be adjusted according to the application and capacity of the battery module.

Fig. 3 shows a battery module 4 as an example. In the battery module 4, a plurality of batteries 5 may be arranged sequentially in the length direction of the battery module 4. Apparently, the secondary batteries may also be arranged in any other manner. Furthermore, the plurality of batteries 5 may be fixed by fasteners.

Optionally, the battery module 4 may further comprise a housing with an accommodating space, and the plurality of batteries 5 are accommodated in the accommodating space.

In some embodiments, the above battery module may also be assembled into a battery pack. The quantity of the battery modules contained in a battery pack may be adjusted according to the application and capacity of the battery pack.

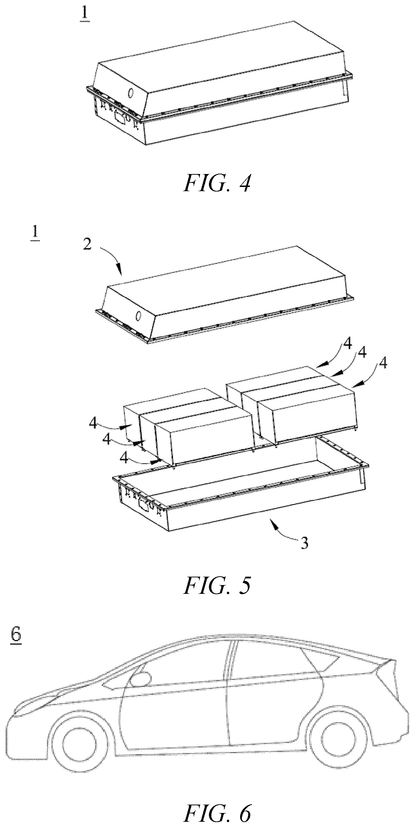

Fig. 4 and Fig. 5 show a battery pack 1 as an example. The battery pack 1 may comprise a battery case and a plurality of battery modules 4 arranged in the battery case. The battery case comprises an upper case body 2 and a lower case body 3, wherein the upper case body 2 can cover the lower case body 3 to form a closed space for accommodating the battery modules 4. The plurality of battery modules 4 may be arranged in the battery case in any manner.

In addition, the present application further provides a power consuming device, which comprises at least one of the battery, the battery module, or the battery pack described above.

The battery, the battery module or the battery pack described above may be used as a power supply or an energy storage unit of the power consuming device.

The above power consuming device may be, but is not limited to, a mobile apparatus (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf vehicle, an electric truck), an electric train, a ship, a satellite, an energy storage system, etc.

A battery, a battery module or a battery pack may be used for the power consuming device according to the usage requirements thereof.

Fig. 6 shows a power consuming device 6 as an example. The power consuming device 6 may be a pure electric vehicle, a hybrid electric vehicle, a plug-in hybrid electric vehicle, etc. In order to meet the requirements of the power consuming device 6 for a high power and a high energy density of a secondary battery, a battery pack or a battery module may be used.

As another example, the power consuming device may be a mobile phone, a tablet computer, a laptop computer, etc. The device is generally required to be thin and light, and may have a secondary battery used as a power source.

### Specific Examples

### Example 1

### (1) Preparation of functional polymer - the specific steps were as follows:

1. Preparation of polyethylene oxide A1: ethylene oxide was subjected to ring-opening polymerization under acidic conditions to obtain polyethylene oxide A1, the specific reaction route was as follows, and the specific preparation process referred to the reference "SUN Lilin, FENG Song, LI Qinghai, SHEN Liangjun, Synthesis and Characterization of Tri-copolymer Poly(ethylene oxide) (PEO) macromonomer, Acrylamide and Methyl Methacrylate [J]. Journal of Anhui Normal University (Natural Sciences), 2003(03): 249-252". 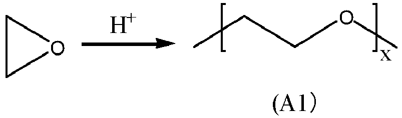 The prepared target product was measured by gel permeation chromatography, and the measured number average molecular weight was 2000 - 5000.
2. Preparation of polystyrene B 1: styrene was polymerized to obtain a polystyrene B 1, the specific reaction route was as follows, and the specific preparation process referred to the reference "WANG Teng. Study on the Preparation and Properties of Polystyrene [D]. Xi'an Shiyou University, 2017". 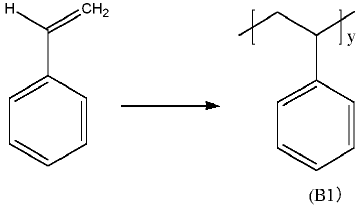 The prepared target product was measured by gel permeation chromatography, and the measured number average molecular weight was 3000 - 5000.
3. Preparation of polymer C1: 2-isobutylethylene oxide was polymerized to obtain a polymer C1, the specific reaction route was as follows, and the specific preparation process referred to the preparation process of polyethylene oxide in the reference "SUN Lilin, FENG Song, LI Qinghai, SHEN Liangjun, Synthesis and Characterization of Tri-copolymer Poly(ethylene oxide) (PEO) macromonomer, Acrylamide and Methyl Methacrylate [J]. Journal of Anhui Normal University (Natural Sciences), 2003(03): 249-252". 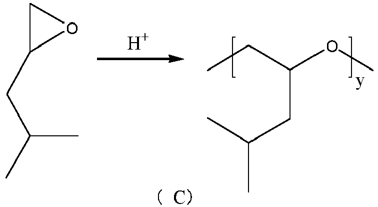
4. Preparation of functional polymer: the specific reaction route referred to the following routes by using atom transfer radical polymerization technology, and the specific preparation process referred to the following references: "CHENG Shiyuan, XU Zushun, YUAN Jianjun, Study on the Crystallization Behavior of Polystyrene-b-poly(ethylene oxide)-b-polystyrene Triblock Copolymers [J ]. Polymeric Materials Science and Engineering, 2001(03): 110-113", or "LIU Xiaotian, LIU Chuansheng, WANG Lishen, Combining Block Polymer of Polycarbonate-Polystyrene by Tandem Method of Enzymatic Ring-Opening Polymerization and Atom Transfer Radical Polymerization [J]. Journal of Dongguan University of Technology, 2013, 20(05): 76-79", or "SHEN Dawa, Synthesis of Polystyrene/Polycarbonate Block and Graft Copolymers by Combining Atom Transfer Radical Polymerization and Condensation Polymerization [D]. Beijing University of Chemical Technology, 2002".

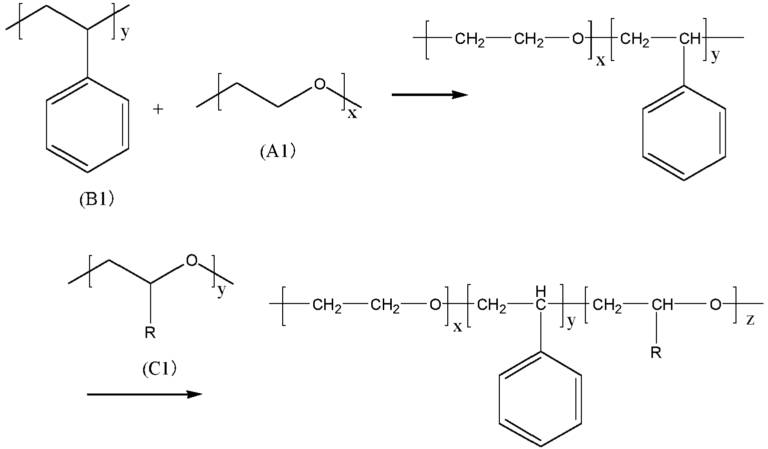

The prepared target product was measured by gel permeation chromatography, and the molecular weight Mn was 10000.

The HLB value of the target product was measured and calculated by the critical micelle concentration method at 25°C in an aqueous solution, in which, HLB = 1.4121 *log^{[CMC]}* - 10.25, [CMC] referred to the measured critical micelle concentration of the functional polymer, and the specific measurement process referred to the standard GB/T 11276-2007. The specific results were shown in Table 1.

(2) An active main material of a lithium nickel manganese cobalt oxide material LiNi_{0.8}Co_{0.1}Mn_{0.1}O₂ (NCM811), conductive carbon SP, PVDF (polyvinylidene fluoride), and the above functional polymer were mixed at a mass ratio of 96.8 : 2 : 1.0 : 0.2, and then dispersed in the solvent N-methylpyrrolidone to obtain a positive electrode slurry.

Blank comparative example: an active main material of a lithium nickel manganese cobalt oxide material (LiNi_{0.8}Co_{0.1}Mn_{0.1}O₂ (NCM811)), conductive carbon SP, PVDF were mixed at a mass ratio of 97 : 2 : 1.0, and then dispersed in the solvent N-methylpyrrolidone to obtain a blank positive electrode slurry.

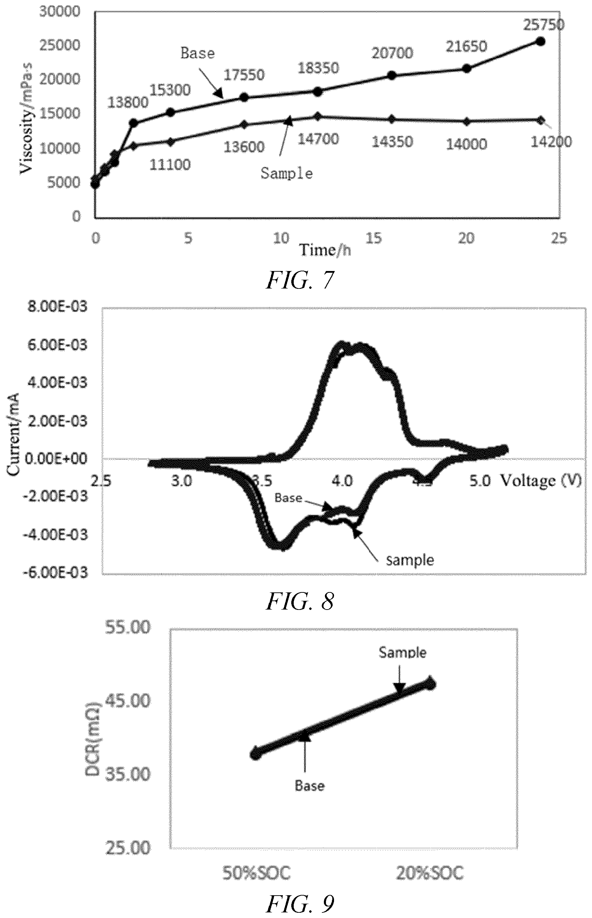

The viscosities of the positive electrode slurry (denoted as Sample) and the blank electrode slurry (denoted as Base) just prepared were measured, respectively, and recorded as the initial viscosity values R0. Then, the prepared positive electrode slurry was allowed to stand at room temperature, and the temperatures under different standing conditions were tested. The viscosity change curves of the positive electrode slurry and the blank electrode slurry were shown in a and b of Fig. 7, respectively.

The above viscosity was measured by a Brookfield viscometer at a room temperature of 25°C. The specific results were shown in Table 1.

It can be seen from the comparison of a and b of Fig. 7 that the viscosity change of the positive electrode slurry using the functional polymer of the present application was small, indicating that the dispersion stability of the components in the positive electrode slurry was better.

(3) The positive electrode slurry prepared in step (2) was coated on a Al foil and dried to form a positive electrode active layer, and cold pressed to obtain a positive electrode plate with a compact density of 3.6 g/cm³.

In the formed positive electrode active layer, the mass proportion of the above functional polymer was recorded as P, and the details were shown in Table 1.

At the same time, step (3) was repeated by replacing the positive electrode slurry in step (3) with the blank electrode slurry to prepare a blank positive electrode plate.

The resistance values of the positive electrode plate and the blank positive electrode plate were measured by a ACCFILM, G2R diaphragm resistance meter, specifically at 25°C by a two-probe measurement. See Table 1 for the results.

The preparation of negative electrode plate included: a negative electrode active material of synthetic graphite, a conductive agent (Super P), a binder and a dispersant (sodium carboxymethyl cellulose) were fully stirred and mixed uniformity in a deionized water solvent system at a weight ratio of 96 : 2 : 1 : 1, and then coated on a Cu foil, dried and cold pressed to obtain a negative electrode plate.

With a PE porous polymer film as a separator, the positive electrode plate or blank positive electrode plate, the separator and the negative electrode plate were stacked in sequence, such that the separator was located between the positive electrode and the negative electrode to play a role of isolation, and then winding was performed to obtain a bare cell and a blank bare cell, respectively.

(4) The bare cell or blank bare cell was placed in an outer package, and the prepared electrolyte solution was injected and packaged to obtain a lithium ion secondary battery (denoted as Sample) or a blank lithium ion secondary battery (denoted as Base). The preparation of the electrolyte solution included: in an argon atmosphere glove box (H₂O < 0.1 ppm, and O₂ < 0.1 ppm), the organic solvents of ethylene carbonate (EC) / ethyl methyl carbonate (EMC) were mixed uniformly at a volume ratio of 3 : 7, and a lithium salt of LiPF₆ was added and dissolved in the organic solvents, and stirred uniformly to obtain the electrolyte solution with a concentration of 10 wt%.

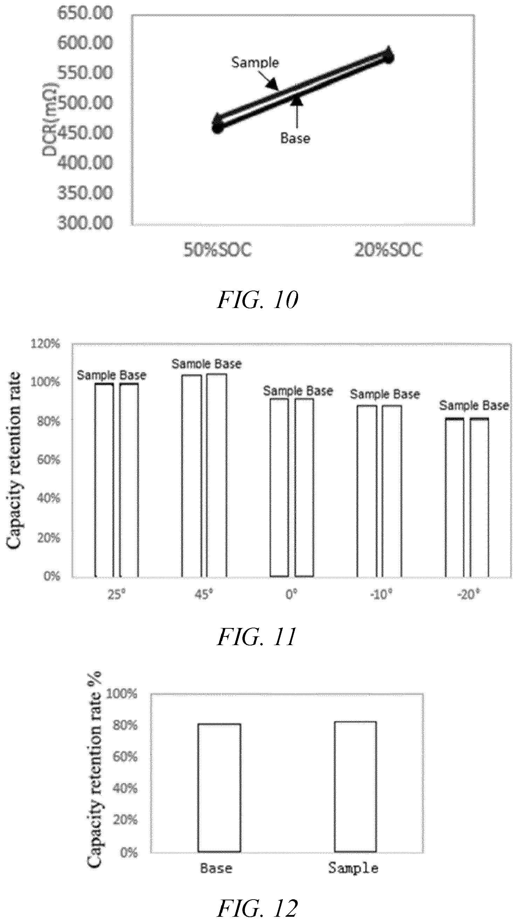

(5) The performances of the prepared lithium ion secondary battery were tested, and the details were as follows:
1. A cyclic voltammetry was used to perform CV tests on the lithium ion secondary battery and the blank lithium ion secondary battery, respectively, and the CV curves were shown in Fig. 8. It can be seen from the figure that the curves of the two were basically consistent, so it can be seen that the addition of the functional polymer did not lead to other extra redox peaks, and the battery could withstand a high voltage above 4.5 V. In Fig. 8, the voltage (V) was the abscissa, and the current (mA) was the ordinate.
2. The discharge DCR (technical direct current impedance) of the prepared lithium ion secondary battery and the blank lithium ion secondary battery at different states of charge (SOC) and different temperatures was tested, and the specific process was as follows:
   20% SOC direct current resistance test: each secondary battery prepared above was left to stand in a constant temperature environment of 25°C for 30 minutes, respectively, discharged at a constant current of 0.33 C to 2.8 V, left to stand for 30 minutes, and charged at a constant current of 0.33 C to 4.25 V; then charged at the constant voltage with a cut-off current of 0.05 C, and left to stand for 30 minutes; and then discharged at 0.33 C to 2.8 V, with the discharge capacity recorded as C0, and left to stand for 30 minutes. Next, it is charged at a constant current of 0.33 C to 4.25 V, charged at the constant voltage with a cut-off current of 0.05 C, and then left to stand for 5 minutes; then discharged at 0.33 C with a cut-off current of 0.5 C0, and left to stand 1 hour, with the voltage recorded as U1 at the moment; and then discharged at a current I = 5 C for 30 seconds, with the voltage recorded as U2 at the moment, and then left to stand for 5 minutes. DCR resistance = (U1 - U2)/I.
   50% SOC direct current resistance test:
      each secondary battery prepared above was left to stand in a constant temperature environment of 25°C for 30 minutes, respectively, discharged at a constant current of 0.33 C to 2.8 V, left to stand for 30 minutes, and charged at a constant current of 0.33 C to 4.25 V; then charged at the constant voltage with a cut-off current of 0.05 C, and then left to stand for 30 minutes; and then discharged at 0.33 C to 2.8 V, with the discharge capacity recorded as C0, and left to stand for 30 minutes. Next, it is charged at a constant current of 0.33 C to 4.25 V, charged at a constant voltage with a cut-off current of 0.05 C, and left to stand for 5 minutes; and then discharged at 0.33 C with a cut-off current of 0.5 C0, and left to stand for 1 hour, with the voltage recorded as U1 at the moment; and then discharged at a current I = 5 C for 30 seconds with the voltage recorded as U2 at the moment, and then left to stand for 5 minutes. DCR resistance = (U1 - U2)/I.
   The discharge DCR-SOC curves of the lithium ion secondary battery and the blank lithium ion secondary battery at 25°C with different states of charge (SOC) were shown in Fig. 9; and the discharge DCR-SOC curves of the lithium ion secondary battery and the blank lithium ion secondary battery at -25°C with different states of charge (SOC) were shown in Fig. 10. It can be seen from the Figs. 9 and 10 that at different temperatures, there was no significant difference between the two DCR-SOC curves, indicating that the addition of the functional polymer did not have a negative impact on the resistance of the electrode plate.
3. Test of the capacity retention rate of the battery:
   the capacity retention rates of the prepared lithium ion secondary battery and the blank lithium ion secondary battery at different temperatures were tested, and the specific process was as follows:
   the secondary battery prepared above was placed in a high and low temperature box (model: SM-012PF, manufacturer: Guangdong SanWood Technology Co., Ltd.) at 25°C, respectively, discharged at 1 C to 2.8 V followed by at 1 C to 2.5 V, left to stand for 5 minutes; then charged at a constant current of 1 C to 4.25 V, charged at a constant voltage with a cut-off current of 0.05 C, with the discharge capacity recorded as C0, and then left to stand for 30 minutes; and then discharged at 1 C to 2.8 V followed by at 1 C to 2.5 V, and then left to stand for 30 minutes. Next, it is charged at a constant current of 1 C to 4.25 V, charged at the constant voltage with a cut-off current of 0.05 C, with the discharge capacity recorded as C1.

The discharge capacity retention rate at 25°C was C1/C0 × 100%.

Then the temperature of the high and low temperature box was adjust to -10°C, and the secondary battery was left to stand for 120 minutes, discharged at 1 C to 2.8 V followed by at 1 C to 2.5 V, with the discharge capacity recorded as C2, and then left to stand for 5 minutes.

The discharge capacity retention rate at -10°C was C2/C0 × 100%.

The tests at 0°C and -20°C referred to the test at -10°C.

Performance test at 45°C: the high and low temperature box was adjusted to 25°C, and each secondary battery prepared above was left to stand for 120 minutes, charged at a constant current of 1 C to 4.25 V, charged at the constant voltage with a cut-off current of 0.05 C, and then left to stand for 5 minutes. The temperature of the high and low temperature box was adjust to 45°C, and each secondary battery prepared above was left to stand for 120 minutes, discharged at 1 C to 2.8 V followed by at 1 C to 2.5 V with the discharge capacity recorded as C3, and then left to stand for 5 minutes.

The discharge capacity retention rate at 45°C was (C3/C0) × 100%. The specific discharge capacity retention ratios of the two were shown in Fig. 11.

The capacity retention rates of the prepared lithium ion secondary battery and the blank lithium ion secondary battery at different rates were tested, and the specific process was as follows:
Test of discharge capacity retention rate: each secondary battery prepared above was left to stand in a constant temperature environment of 25°C for 30 minutes, respectively. The secondary battery was discharged at a constant current of 0.33 C to 2.8 V followed by at 0.33 C to 2.5 V, then left to stand for 1 hour, and charged at a constant current of 0.33 C to 4.25 V; then charged at the constant voltage with a cut-off current of 0.05 C, and left to stand for 30 minutes; and then discharged at a constant current of 0.33 C to 2.8 V followed by at 0.33 C to 2.5 V, with the discharge capacity recorded as C0, and left to stand for 1 hour. Next, it is charged at a constant current of 0.33 C to 4.25 V, charged at the constant voltage with a cut-off current of 0.05 C, and left to stand for 30 minutes. The secondary battery was discharged at 0.5 C to 2.8 V followed by at 0.5 C to 2.5 V, with the discharge capacity recorded as C0.5.

The discharge capacity retention rate at a rate of 0.5 C was (C0.5/C0) × 100%.

Then the secondary battery was discharged at 2 C to 2.8 V followed by at 2 C to 2.5 V, with the discharge capacity recorded as C2, and then left to stand for 30 minutes. The discharge capacity retention rate at 2 C was (C2/C0) × 100%.

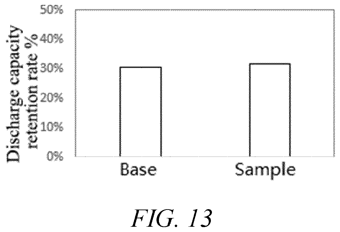

The bar charts of the capacity retention rates of the lithium ion secondary battery and the blank lithium ion secondary battery at the rate of 0.5 C were shown in Fig. 12; and the bar charts of the capacity retention rates of the lithium ion secondary battery and the blank lithium ion secondary battery at the rate of 2 C were shown in Fig. 13, respectively.

It can be seen from Figs. 11 - 13 that the capacity retention rates of the two were basically the same, indicating that the addition of the functional polymer did not have a negative impact on the cell capacity and rate of the electrode plate.

### 4. Cycling performance test:

At 25°C, the prepared lithium ion secondary battery and the blank lithium ion secondary battery were repeatedly charged and discharged, respectively, and the capacity retention rate (capacity) after n cycles of charge and discharge was calculated, and the cycling performance test was as follows:
at 25°C, the secondary battery prepared above was charged at a constant current rate of 1 C to an cut-off voltage of 4.25 V, then charged at the constant voltage to a current of ≤ 0.05 C, left to stand for 5 min, then discharged at a constant current rate of 0.33 C to an end-of-discharge voltage of 2.8 V, and left to stand for 5 min, with the capacity recorded as C0 at the moment, and this was one charge and discharge cycle.

The battery was subjected to 500 cycles of charge and discharge test according to the above method, and the discharge capacity of each cycle was recorded, and the capacity after 500 cycles was recorded as C500, in which C500 = (C500/C0) × 100%.

After the cycle test, the battery was disassembled to observe whether the positive electrode plate cracked or not. During the test, it was found that the capacity retention rates of the two were basically the same after 70 cycles at 25°C; and the electric capacity retention rates (capacity) after 500 cycles of charge and discharge were shown in Table 1.

### Examples 2-6

Examples 2-6 were basically the same as Example 1, only except that the number average molecular weight Mn of the prepared functional polymer was changed by adjusting and controlling the addition amount of monomer of A1, B1 and C1 units while keeping the ratio of K : L : M unchanged.

Other steps and conditions were the same as in Example 1.

### Examples 7-10

Examples 2-6 were basically the same as Example 1, only except that the ratio of K : L : M was changed and the molecular weight of the functional polymer was kept unchanged by adjusting and controlling the addition amount of monomer of A1, B1 and C1 units.

Other steps and conditions were the same as in Example 1.

### Examples 11-13

Examples 11 - 13 were basically the same as Example 1, only except that in the preparation of the positive electrode slurry in step (2), the mass proportion P of the functional polymer in the formed positive electrode active layer was changed by adjusting and controlling the mass ratio of the active material to the functional polymer, and the details were shown in Table 1.

### Comparative example 1

Comparative example 1 was basically the same as Example, only except that in the preparation step of the functional polymer, the polyethylene oxide A1 and the polystyrene B1 were used, but the polymer C1 was not added.

Other steps and conditions were the same as in Example 1.

### Comparative example 2

Comparative example 2 was basically the same as Example 1, only except that in the preparation step of the functional polymer, the polystyrene B1 and the polymer C1 were used, but the polyethylene oxide A1 was not added.

Other steps and conditions were the same as in Example 1.

### Comparative example 3

Comparative example 3 is basically the same as Example 1, only except that in the preparation of the positive electrode slurry in step (2), the functional polymer was replaced with SEBS (YH-502T) of equal mass, and the molecular weight of the two was the same.

Other steps were the same as in example 1, and the specific parameters were shown in Table 1.

Related physical parameters and test results of Examples and Comparative examples were shown in Table 1. Based on the total feed mass of the polyethylene oxide A1, the polystyrene B1 and the polymer C1, the mass proportions of the polyethylene oxide A1, the polystyrene B1 and the polymer C1 were shown in Table 1.

**Table 1**

| | Mass proportion of polyethylen e oxide A1 | Mass proportio n of polystyre ne B1 | M Mass proporti on of polymer C1 | Mn | HLB value | P | Resistan ce of positive electrod e plate (Ω) | Crac king | Electric capacity retention rate C500 |
|---|---|---|---|---|---|---|---|---|---|
| Example 1 | 40% | 20% | 40% | 10,000 | 11 | 0.2% | 1.09 Ω | No | 87% |
| Example 2 | 40% | 20% | 40% | 15,000 | 11 | 0.2% | 0.32 Ω | No | 93% |
| Example 3 | 40% | 20% | 40% | 20,000 | 11 | 0.2% | 0.57 Ω | No | 91% |
| Example 4 | 40% | 20% | 40% | 30,000 | 11 | 0.2% | 0.35 Ω | No | 90% |
| Example 5 | 40% | 20% | 40% | 40,000 | 11 | 0.2% | 0.33 Ω | Yes | When cycling to 400 cls, positive electrode plate cracked |
| Example 6 | 40% | 20% | 40% | 50,000 | 11 | 0.2% | 0.32 Ω | Yes | When cycling to 350 cls, positive electrode plate cracked |
| Example 7 | 33.3% | 33.3% | 33.4% | 10,000 | 8 | 0.2% | 1.13 Ω | No | 85% |
| Example 8 | 60% | 20% | 20% | 10,000 | 14 | 0.2% | 1.07 Ω | Yes | When cycling to 350 cls, positive electrode plate cracked |
| Example 9 | 20% | 60% | 20% | 10,000 | 6 | 0.2% | 1.12 Ω | Yes | When cycling to 350 cls, positive electrode plate cracked |
| Example 10 | 20% | 20% | 60% | 10,000 | 7 | 0.2% | 1.12 Ω | No | 87% |
| Example 11 | 40% | 20% | 40% | 10,000 | 11 | 0.1% | 1.05 Ω | Yes | When cycling to 350 cls, positive electrode plate cracked |
| Example 12 | 40% | 20% | 40% | 10,000 | 11 | 0.3% | 0.65 Ω | No | 91% |
| Example 13 | 40% | 20% | 40% | 10,000 | 11 | 0.5% | 0.65 Ω | No | 85% |
| Blank comparativ e example | / | / | / | / | / | / | 1.21 Ω | Yes | When cycling to 150 cls, positive electrode plate cracked |
| Comparativ e example 1 | 50% | 50% | / | 10,000 | 10 | 0.2% | 1.03 Ω | No | When cycling to 320 cls, positive electrode plate cracked |
| Comparativ e example 2 | / | 50% | 50% | 10,000 | / | 0.2% | 1.14 Ω | Yes | When cycling to 250 cls, positive electrode plate cracked |
| Comparativ e example 3 | / | / | / | 10,000 | / | 0.2% | 1.12 Ω | Yes | When cycling to 300 cls, positive electrode plate cracked |

In the table, "/" means that the substance was not present or there were no test results.

According to the analysis of the experimental results in Table 1, it can be seen that the functional polymer with a specific structure in the present application can increase the dispersion stability of the electrode slurry, and at the same time have a toughening effect, which can reduce the resistance of the electrode plate, increase the stability and anti-cracking ability of the electrode plate, thereby increasing the cycling stability of the battery. During the cyclic charge and discharge process, the number of cycles can reach 350 or more, and by further adjusting and controlling the molecular weight and the proportion of each structural unit of the functional polymer, the stability and anti-cracking ability of the electrode plate can be further increased, and the cycling stability of the battery can be increased, such that the battery still has a high capacity retention rate after 500 cycles of charge and discharge. However, the batteries of blank comparative examples and comparative examples 1-3 can only reach 320 cycles or even less during the cyclic charge and discharge process, and their cycling stability is extremely poor.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but comprises all the technical solutions that fall within the scope of the claims.

## Claims

1. A functional polymer, comprising structural units represented by formula (A), formula (B) and formula (C): 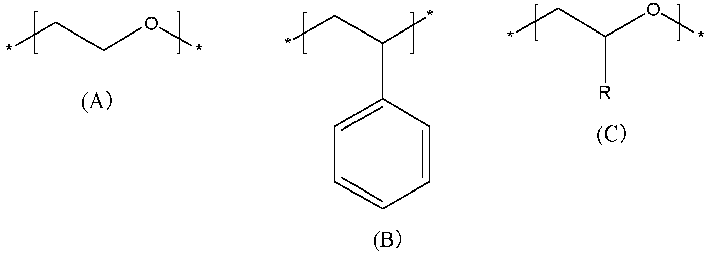 * represents a linking site, and R is selected from a combination of one or more of branched polyester segments, branched alkane groups with 4-60 carbon atoms, and branched polyolefins.

2. The functional polymer of claim 1, wherein the functional polymer satisfies at least one of conditions (1) - (3):
(1) the mass proportion of the structural unit represented by formula (A) in the functional polymer is 20 wt% - 60 wt%;
optionally, the mass proportion of the structural unit represented by formula (A) in the functional polymer is 20 wt% - 40 wt%;
(2) the mass proportion of the structural unit represented by formula (B) in the functional polymer is 20 wt% - 60 wt%;
optionally, the mass proportion of the structural unit represented by formula (B) in the functional polymer is 20 wt% - 40 wt%; and
(3) the mass proportion of the structural unit represented by formula (C) in the functional polymer is 20 wt% - 60 wt%.

3. The functional polymer either of claim 1 or 2, wherein R is selected from any one of dendritic polyester segments, alkane groups containing at least two branches with 4-50 carbon atoms, and dendritic polyolefin segments.

4. The functional polymer of any one of claims 1-3, wherein the structural unit represented by formula (C) satisfies at least one of conditions (4) - (5):
(4) R is selected from alkane groups containing at least two branches with 4-50 carbon atoms or dendritic polyolefin segments with a number average molecular weight of 100 - 2000; and
(5) the structural unit represented by formula (C) has a number average molecular weight of 50 - 5000.

5. The functional polymer of any one of claims 1 - 4, wherein R comprises a branched structure as shown below: 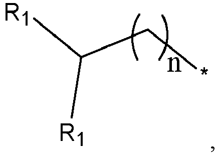 wherein each R₁ is independently selected from alkane groups with 1-20 carbon atoms, and n is selected from any integer of 1 - 10.

6. The functional polymer of claim 5, wherein each R₁ is independently selected from alkane groups with 1 - 5 carbon atoms, respectively;
optionally, each R₁ is independently selected from any one of methyl, ethyl, propyl, n-butyl and isobutyl, respectively.

7. The functional polymer of any one of claims 1 - 6, comprising polymeric segments represented by formula (A1), formula (B1) and formula (C1): 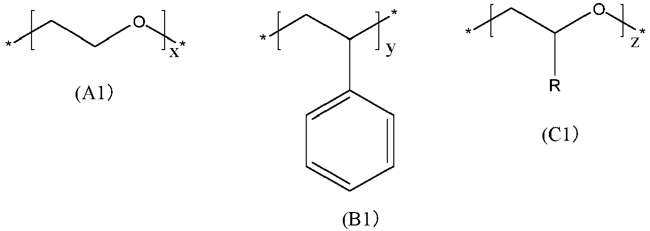 wherein x, y, and z represent the degree of polymerization, and x, y, and z are independently selected from any integer of 20 - 80, respectively.

8. The functional polymer of any one of claims 1-7, comprising a molecular chain structure represented by formula (1): 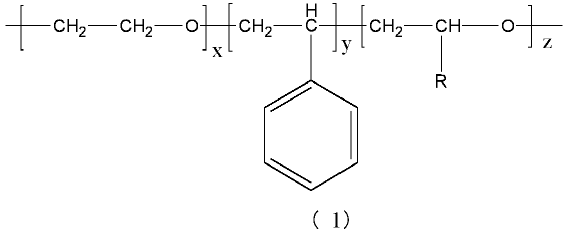 wherein x, y, and z represent the degree of polymerization, and x, y, and z are independently selected from any integer of 20 - 80, respectively.

9. The functional polymer of claims 1 - 8, wherein the functional polymer has a HLB value of 6 - 14;
optionally, the functional polymer has a HLB value of 7 - 11.

10. The functional polymer of any one of claims 1-9, wherein the number average molecular weight of the functional polymer is 10000 - 50000.

11. Use of a functional polymer of any one of claims 1 - 10 as an electrode additive.

12. An electrode slurry, comprising an electrode active material, a conductive agent and a functional polymer of any one of claims 1-10.

13. The electrode slurry of claim 12, wherein based on the total mass of the components of the electrode slurry except a solvent, the mass proportion of the functional polymer is 0.1% - 0.5%;
optionally, the mass proportion of the functional polymer is 0.2% - 0.5%.

14. The electrode slurry of either of claims 12 - 13, wherein the electrode active material is a positive electrode active material or a negative electrode active material.

15. An electrode plate, comprising a current collector and an active layer located on the surface of the current collector, wherein the components of the active layer comprise a functional polymer of any one of claims 1 - 10, or the electrode plate is prepared from an electrode slurry of any one of claims 12 - 14.

16. A battery, comprising an electrode plate of claim 15.

17. A power consuming device, comprising a battery of claim 16.
